# EUROPEAN PATENT SPECIFICATION

(11) **EP 1 249 974 B1**
(45) Date of publication and mention of the grant of the patent: **13.09.2006**
(21) Application number: 02005648.7
(22) Date of filing: 12.03.2002
(51) Int. Cl.: H04L 12/56, H04L 12/64

(54) **Method and communication node for topology correction**
Verfahren und Kommunikationsknoten zur Richtigstellung der Topologie
Méthode et noeud de communication en vue de la correction de topologie

(30) Priority: 13.04.2001 JP 2001115202
(43) Date of publication of application: 16.10.2002
(73) Proprietor: MATSUSHITA ELECTRIC INDUSTRIAL CO., LTD., Kadoma-shi, Osaka 571-8501 (JP)
(72) Inventor: Tatsumi, Toshihiro, Takatsuki-shi, Osaka 569-1143 (JP)
(74) Representative: Grünecker, Kinkeldey, Stockmair & Schwanhäusser Anwaltssozietät

(56) References cited:
- EP-A- 0 964 552
- US-A- 5 784 557
- YAGO, TAKANO, TOKURA: "Loop Prevention for IEEE 1394-1995 and IEEE 1394a-2000 Networks" IEEE TRANSACTIONS ON CONSUMER ELECTRONICS, vol. 48, no. 1, February 2002 (2002-02), pages 135-142, XP001085257
- PATENT ABSTRACTS OF JAPAN vol. 1999, no. 08, 30 June 1999 (1999-06-30) & JP 11 074889 A (MATSUSHITA ELECTRIC IND CO LTD), 16 March 1999 (1999-03-16)
- PATENT ABSTRACTS OF JAPAN vol. 2000, no. 03, 30 March 2000 (2000-03-30) & JP 11 345193 A (CANON INC), 14 December 1999 (1999-12-14)
- HOFFMAN G ET AL: "IEEE 1394: a ubiquitous bus" DIGEST OF PAPERS. COMPCON '95. TECHNOLOGIES FOR THE INFORMATION SUPERHIGHWAY (CAT. NO.95CH35737), DIGEST OF PAPERS. COMPCON'95. TECHNOLOGIES FOR THE INFORMATION SUPERHIGHWAY, SAN FRANCISCO, CA, USA, 5-9 MARCH 1995, pages 334-338, XP000545446 1995, Los Alamitos, CA, USA, IEEE Comput. Soc. Press, USA ISBN: 0-8186-7029-0

## Description

### BACKGROUND OF THE INVENTION

The present invention generally relates to a network including a plurality of communication nodes. More particularly, the present invention relates to technology of automatically correcting logical configuration of topology in an interface that is incapable of communication when communication nodes are connected in an annular manner, thereby allowing communication to continue.

In general, when the communication nodes are connected in an annular manner on the network, a plurality of data transmission paths are generated between the communication nodes, making the network immune to failure of the transmission paths. However, such annular connection may possibly cause the same data to be transmitted through a plurality of different paths or may cause the same data to be endlessly propagated through the transmission paths.

For example, in the network having annular connection by 10BASE-T defined in IEEE802.3, the transmission paths are managed as follows: a switch determines a path for data transmission from the destination of the data in order to prevent unnecessary propagation of the data.

For example, in the LAN-to-LAN (local area network) connection, the spanning tree protocol defined in IEEE802.1 or the like is used to manage and operate the transmission paths so that the transmission paths can always be used as a tree structure even in the annular network topology.

The above related art requires a network manager such as host or switch in order to conduct management of the data transmission paths, management of the network topology, and address allocation.

Accordingly, the above related art is not applicable to an interface defined by, e.g., IEEE1394, that is, an interface in which every transmission node is equal and communication must be conducted even without the host. Accordingly, in IEEE1394, annular connection makes every communication node incapable of communication.

Moreover, in IEEE1394, a large number of communication nodes (at most 63) are connectable and a large number of ports (ports where a communication cable is connected) (at most 16) are allocated to each communication node. This makes it impossible to obtain information on the source of annular connection (i.e., which transmission path of which communication node causes annular connection) from a bus. Accordingly, provided that there are only a small number of communication nodes, the user can find annular connection and correct a transmission path (remove a cable) if he/she erroneously connects the communication nodes in an annular manner. However, in view of the case where the transmission paths are connected across a plurality of rooms or 1,000 or more transmission paths are connected, it is extremely difficult for the user to find every annular path for correction.

EP-A-0 964 552 describes a system which removes a loop from a network according to the IEEE 1394 standard by disconnecting network links. After a change to the network structure, a bus reset is performed and connection relations between network nodes are configured by a mutual exchange of confirmation information. A node detects the presence of a loop with respect to any of its links by a failure in the exchange of confirmation information and disconnects one of the affected links. Then, a bus reset is performed in the network and the connection relation configuration procedure is carried out again.

It is an object of the invention to provide for improved correction techniques regarding annular connections in a network.

This object is achieved by the features of claims 1 and 5 for a method for correcting a network topology, and claims 6 and 7 for a communication node.

Further embodiments are subject-matter of the dependent claims.

The present invention is made in view of the fact that "no annular connection exists until right before annular connection is conducted", that is, "when annular connection is conducted, canceling only the annular connection would generate no annular connection".

More specifically, in the present invention, when a new transmission path is added in a network by, e.g., insertion of a communication cable or power-on of a communication node, only the communication nodes located at both ends of the added transmission path determine whether or not a new annular path is formed by the added transmission path. If a new annular path is formed, the added transmission path is logically or physically made unavailable in order to prevent formation of the annular path.

In contrast, when an arbitrary transmission path is disconnected due to, e.g., failure of a communication cable or power-off of a communication node, whether or not a logically or physically unavailable transmission path forms a part of an annular path is reconfirmed. If the transmission path no longer forms a part of the annular path, the transmission path is made available, allowing communication to continue by using the maximum available transmission paths.

More specifically, according to the present invention, a method for correcting topology in a network including a plurality of communication nodes includes: an annular-path determination process in which, when a new transmission path is added, at least one of communication nodes located at both ends of the added transmission path determines as a determining node whether or not a new annular path is formed by the added transmission path; and a transmission-path disconnection process in which, when it is determined in the annular-path determination process that a new annular path is formed, at least one of the communication nodes located at both ends of the added transmission path logically or physically makes the added transmission path unavailable in order to prevent formation of the annular path.

According to the present invention, when a new transmission path is added, at least one of communication nodes located at both ends of the added transmission path determines whether or not a new annular path is formed by the added transmission path. If it is determined that a new annular path is formed, the added transmission path is logically or physically made unavailable in order to prevent formation of the annular path. This enables even an interface that is incapable of communication when the communication nodes are connected in an annular manner to deal with the annular connection, that is, to continue communication even after the annular connection.

In the method of the present invention, the determining node is one of the communication nodes located at both ends of the added transmission path. This enables reduction in processing time for confirming whether an annular path is formed or not.

In the method of the present invention, when a new transmission path is added by turning on power of a single communication node, only the powered-on communication node serves as the determining node in the annular-path determination process. This prevents the number of communication nodes to determine annular connection from being unnecessarily increased, enabling the transmission-path disconnection process to be accurately conducted with high efficiency.

In the annular-path determination process in the method of the present invention, the determining node transmits a confirmation signal through the added transmission path, and determines whether or not a new annular path is formed by determining whether or not the confirmation signal returns from a transmission path of the determining node other than the added transmission path. This enables whether an annular path is formed or not to be determined highly efficiently and easily without specifically requiring an equipment having special capability such as host equipment. Moreover, the communication nodes have preset, unique waiting times different from each other. In the annular-path determination process, the determining node transmits the confirmation signal after the corresponding preset waiting time.

In the method of the present invention, the transmission-path disconnection process includes the step of logically or physically making an attribute of a port forming the added transmission path unavailable by one of the communication nodes located at both ends of the added transmission path.

According to the present invention, a method for correcting topology in a network including a plurality of communication nodes includes: an annular-path determination process in which, when an arbitrary transmission path is eliminated, at least one of communication nodes located at both ends of a logically or physically unavailable transmission path determines as a determining node whether or not an annular path is formed if the unavailable transmission path becomes available; and a transmission-path restoration process in which, when it is determined in the annular-path determination process that no annular path is formed, at least one of the communication nodes located at both ends of the unavailable transmission path makes the unavailable transmission path available.

According to the present invention, when an arbitrary transmission path is eliminated, at least one of communication nodes located at both ends of an unavailable transmission path determines whether or not an annular path is formed if the unavailable transmission path becomes available. If it is determined that no annular path is formed, the unavailable transmission path is made available. This allows communication to continue by using the maximum available transmission paths in an interface that is incapable of communication when the communication nodes are connected in an annular manner.

In the annular-path determination process in the method of the present invention, the determining node transmits a confirmation signal through the unavailable transmission path, and determines whether or not an annular path is formed by determining whether or not the confirmation signal returns from a transmission path of the determining node other than the unavailable transmission path. This enables whether an annular path is formed or not to be determined highly efficiently and easily without specifically requiring an equipment having special capability such as host equipment.

Moreover, the communication nodes have preset, unique waiting times different from each other. In the annular-path determination process, the determining node transmits the confirmation signal after the corresponding preset waiting time. Thus, in the case where a plurality of communication nodes transmit a confirmation signal, each communication node transmits a confirmation signal after the respective unique waiting time, so that each communication node starts the processing at different timing. This eliminates the possibility of restoring an unwanted transmission path.

In a communication node forming a network according to the present invention, when a new transmission path is added to a port of the communication node, the communication node transmits a confirmation signal through the added transmission path, and determines whether or not a new annular path is formed in the network by determining whether or not the confirmation signal returns from a transmission path of the communication node other than the added transmission path.

In a communication node forming a network according to the present invention, when an arbitrary transmission path in the network is eliminated and a port of the communication node is connected to a logically or physically unavailable transmission path, the communication node transmits a confirmation signal through the unavailable transmission path, and determines whether or not an annular path is formed if the unavailable transmission path becomes available by determining whether or not the confirmation signal returns from a transmission path of the communication node other than the unavailable transmission path.

### BRIEF DESCRIPTION OF THE DRAWINGS

FIG. **1** conceptually shows a network including a plurality of communication nodes;
FIG. **2** is a flowchart illustrating the processing in the case where a new transmission path is added according to first and second embodiments of the present invention;
FIG. **3** shows the state in which a confirmation signal is transmitted from a communication node **ND4** in the network of FIG. **1;**
FIG. **4** shows the state in which the confirmation signal is propagated and returns from a port **P8** as a result of FIG. **3**;
FIG. **5** shows the steady state after a transmission path **P4-P9** is connected as a result of FIG. **4**;
FIGs. **6A** and **6B** are conceptual diagrams of the time required for a confirmation process;
FIG. **7** shows the state in which the power of a communication node **ND2** is off in the network of FIG. **1**;
FIG. **8** shows an example in which a plurality of communication nodes serve as nodes to transmit a confirmation signal;
FIG. **9** shows the state in which the plurality of communication nodes to transmit a confirmation signal simultaneously transmit a confirmation signal;
FIG. **10** shows the state in which an annular path is formed as a result of simultaneous transmission of a confirmation signal;
FIG. **11** shows an example in which the plurality of communication nodes sequentially transmit a confirmation signal;
FIG. **12** shows the state in which only a powered-on communication node **ND2** is determined as a node to transmit a confirmation signal, based on the state of FIG. **7**;
FIG. **13** shows the state in which a confirmation signal is transmitted from a port **P2** of the communication node **ND2**;
FIG. **14** shows the state in which a confirmation signal is transmitted from a port **P3** of the communication node **ND2**;
FIG. **15** shows the state in which a confirmation signal is transmitted from a port **P4** of the communication node **ND2**;
FIG. **16** shows corrected bus topology according to the second embodiment of the present invention;
FIG. **17** is a flowchart illustrating the processing in the case where a transmission path is eliminated according to a third embodiment of the present invention;
FIG. **18** shows the state in which a confirmation signal is transmitted from the communication node **ND2** when a transmission path **P10-P11** is disconnected;
FIG. **19** shows bus topology corrected after the transmission path **P10-P11** is disconnected;
FIG. **20** shows the state in which a confirmation signal is transmitted from the communication node **ND2** when the power of a communication node **ND3** is shut off in FIG. **19**; and
FIG. **21** shows bus topology corrected after the power of the communication node **ND3** is shut off.

### DETAILED DESCRIPTION OF THE INVENTION

Hereinafter, embodiments of the present invention will be described in conjunction with the accompanying drawings. It is herein assumed that the present invention is implemented in a cable physical layer defined in IEEE1394. The embodiments will be described in view of the limitations of IEEE1394.

### (First Embodiment)

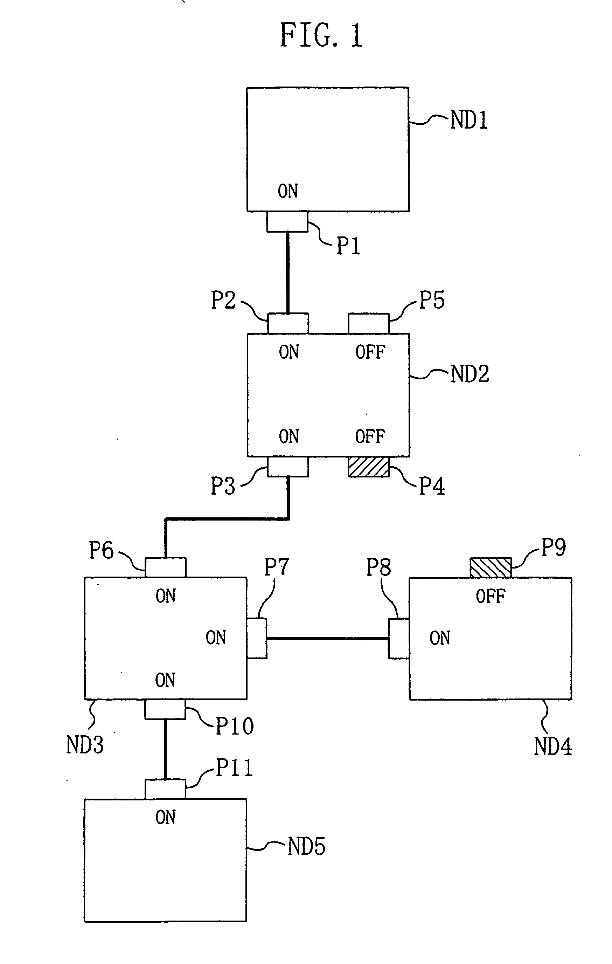

In the first embodiment of the present invention, the process of topology correction in a network including a plurality of communication nodes will be described in connection with FIGs. **1** to **6B.** It is herein assumed that a new transmission path is added by cable insertion.

FIG. **1** conceptually shows a network including five communication nodes **ND1** to **ND5.** In FIG. **1,** the communication node **ND1** includes a port **P1.** Similarly, the communication node **ND2** includes ports **P2** to **P5,** and the communication node **ND3** includes ports **P6**, **P7**, **P10**. The communication node **ND4** includes ports **P8, P9,** and the communication node **ND5** includes a port **P11.**

Note that the term "communication node" conceptually indicates an equipment forming a network. For example, provided that the network is a home LAN, the communication node corresponds to a personal computer, television, video equipment, printer or the like. The term "port" corresponds to a cable port provided in each communication node. It should be noted that the "communication node" sometimes indicates a part of a network equipment that is responsible for communication, for example, communication LSI (large scale integration) itself. In the specification, a communication node is sometimes simply referred to as "node".

In FIG. **1,** the ports **P1** and **P2,** ports **P3** and **P6,** ports **P7** and **P8,** and ports **P10** and **P11** are connected through a corresponding communication cable. Hereinafter, a transmission path connecting ports A and B is referred to as "transmission path A-B". More specifically, in the network of FIG. **1**, transmission paths **P1-P2, P3-P6, P7-P8** and **P10-P11** have already been formed.

Description will now be given for the processing in the case where the ports **P4** and **P9** are connected through a cable, that is, in the case where a new transmission path **P4-P9** is added.

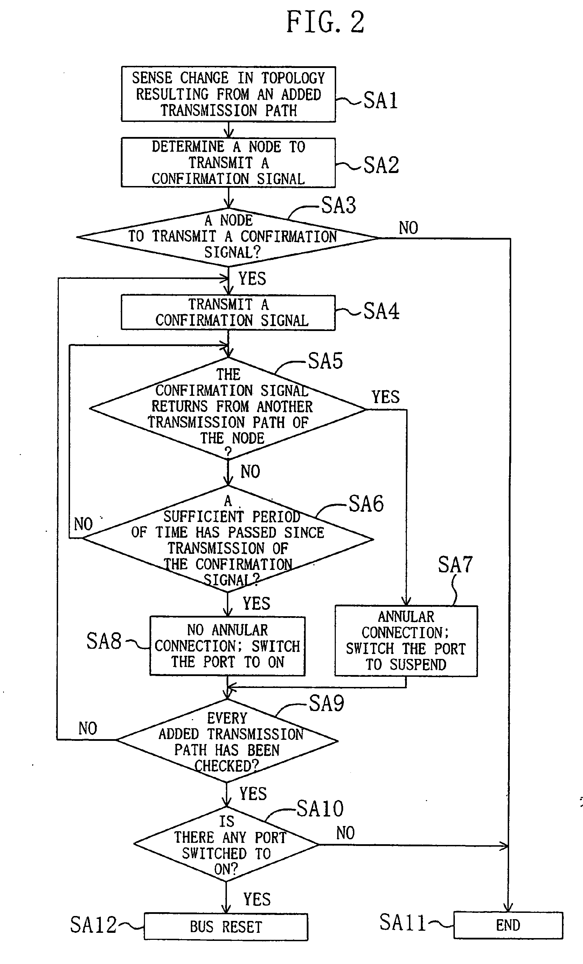

FIG. **2** is a flowchart illustrating the processing conducted by the equipments detecting an added transmission path, that is, the equipments located at both ends of the added transmission path. It is herein assumed that the transmission path is added by turning on the power of a communication node, connecting communication nodes or the like. Note that, during the processing of FIG. **2**, a port recognizing the new transmission path transitions from OFF state to TEST state. Steps **SA4** to **SA6** correspond to an annular-path determination process, and step **SA7** corresponds to a transmission-path disconnection process.

First, the communication nodes **ND2**, **ND4** sense change in topology resulting from the added transmission path (step **SA1**). Only these communication nodes **ND2, ND4** conduct the subsequent processing.

Then, a communication node to conduct a confirmation process is determined (step **SA2**). The communication node to conduct the confirmation process is herein determined by a method for determining the parent-child relation between the ports defined by IEEE1394. More specifically, in the case of FIG. **1**, the parent-child relation between the ports **P4** and **P9** is determined by transmitting PARENT_NOTIFY, CHILD_NOTIFY signals between the ports **P4** and **P9**, and a communication node having a parent port is determined as a communication node to transmit a confirmation signal.

It is herein assumed that the port **P9** is a parent port and thus the communication node **ND4** transmits a confirmation signal. In other words, only the communication node **ND4** as a determining node conducts the subsequent processing (step **SA3**).

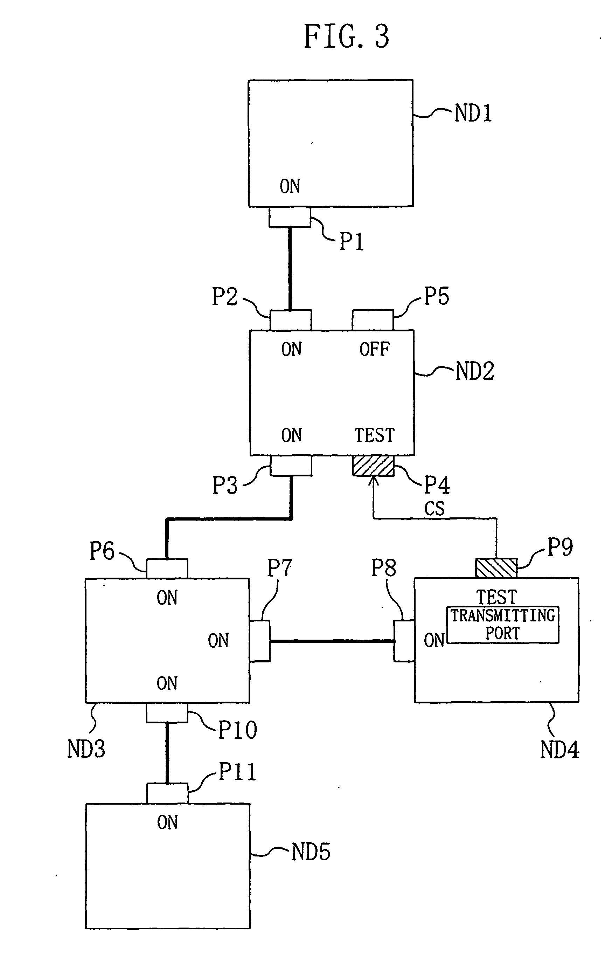

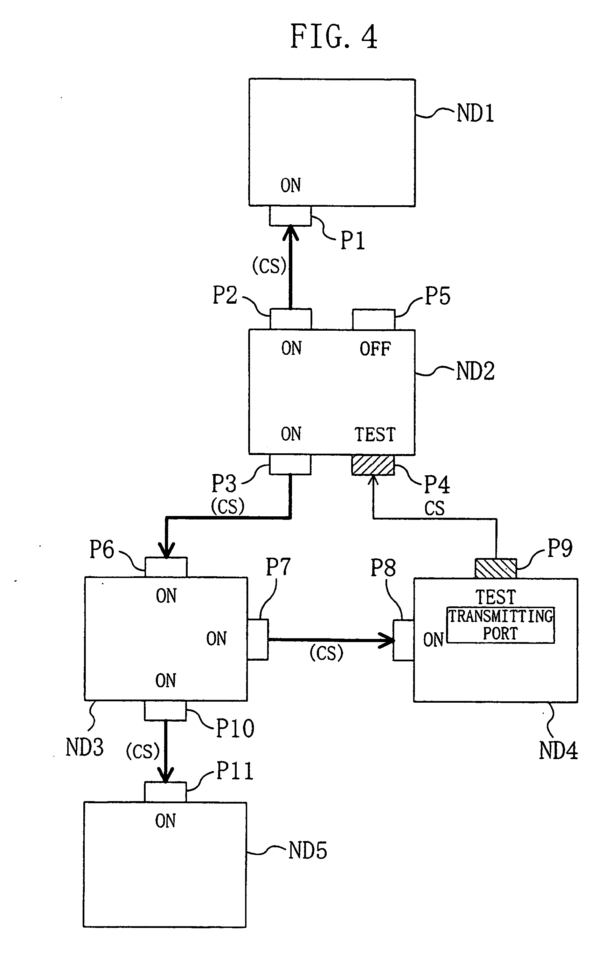

As shown in FIG. **3**, the communication node **ND4** first transmits a confirmation signal **CS** from the port **P9** (step **SA4**). Each communication node has a property of propagating the received confirmation signal **CS** to all the ports in the ON state but the receiving port. In other words, as shown in FIG. **4,** the confirmation signal **CS** is propagated through all the transmission paths on the network, more specifically, the transmission paths **P1-P2, P3-P6, P7-P8** and **P10-P11.**

The communication node **ND4** then determines whether or not the confirmation signal **CS** transmitted from the port **P9** returns from another port (in this case, port **P8**) (steps **SA5, SA6**). If the confirmation signal **CS** returns from another port (YES in step **SA5**), it is then determined in step **SA7** that an annular path is formed, and that port is switched to SUSPEND state. If the confirmation signal **CS** does not return after a sufficient period of time (YES in Step **SA6**), it is then determined in step **SA8** that no annular path is formed, and that port is switched to ON state.

Since the confirmation signal **CS** herein returns from the port **P8,** the node **ND4** then determines in step **SA7** that an annular path is formed by adding the transmission path **P4-P9,** and the port **P9** is switched to SUSPEND state.

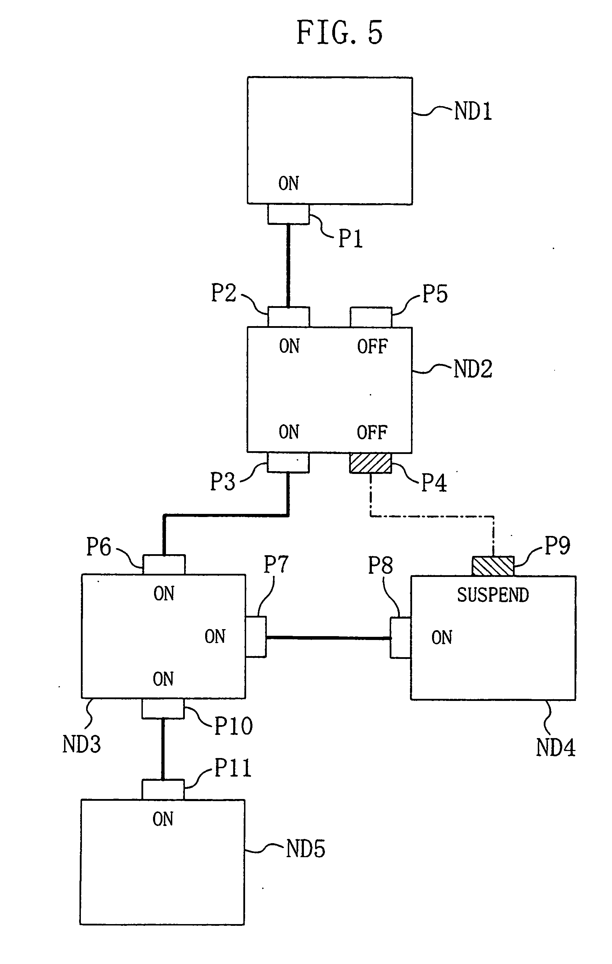

Finally, the condition of step **SA10** is determined. Herein, there is no port switched to ON state. Therefore, the processing is terminated (step **SA11**). More specifically, since the transmission path **P4-P9** forms an annular path, adding the transmission path **P4-P9** will not result in bus reset. FIG. **5** shows the processing result. Although the ports **P4** and **P9** are connected through a cable, the port **P9** is in SUSPEND state. Therefore, the transmission path **P4-P9** is unavailable.

The following methods are possible as a method for switching a port to SUSPEND state: logically switching a port to SUSPEND state by, e.g., changing only an attribute value of the port; and physically switching a port to SUSPEND state by, e.g., rendering the port in high impedance state. The former method would require that the other port of the transmission path (in this case, port **P4**) be also logically switched to SUSPEND state. In the latter method, the port **P4** is automatically switched to OFF state.

This indicates that the processing of switching the port to SUSPEND state when a transmission path is added and the processing of restoring the port to ON state in the future can be conducted easier in the latter method than in the former method. Therefore, it is preferable to use the method for physically switching only one port to SUSPEND state.

Note that, in the present embodiment, the method for determining the parent-child relation between the ports is used to determine a communication node to conduct the confirmation process. However, another method may be used.

Alternatively, both communication nodes located at both ends of the added transmission path may conduct the confirmation process. More specifically, in the example of the present embodiment, both communication nodes **ND2** and **ND4** may conduct the confirmation process and transmit a confirmation signal.

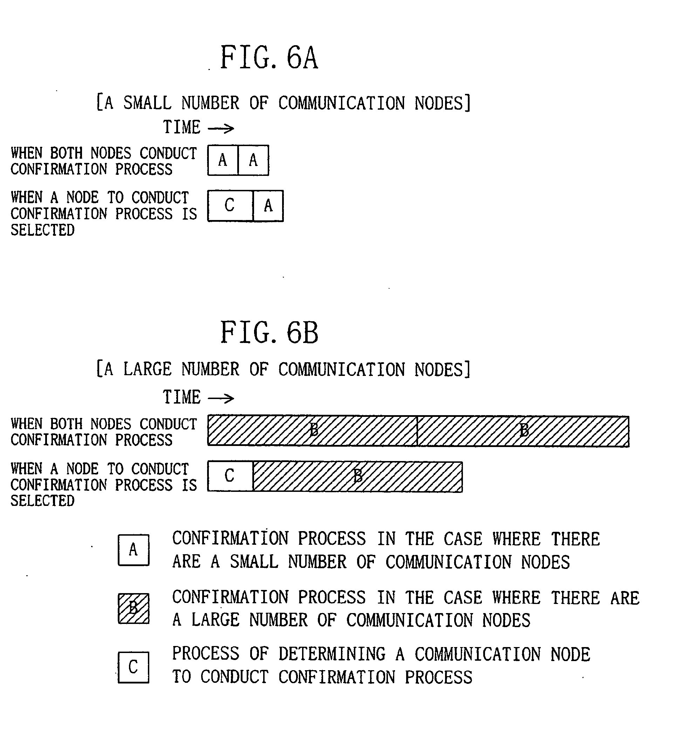

FIGs. **6A** and **6B** are conceptual diagrams of the time required for the confirmation process. The time required for the confirmation process increases approximately in proportion to increase in the number of communication nodes. Accordingly, as shown in FIG. **6A**, in the case where there are a small number of communication nodes, the overall processing time is shorter when both nodes conduct the confirmation process **A** without conducting the process **C** of selecting a node to conduct the confirmation process. However, in the case where there are a large number of communication nodes, the overall processing time can be reduced more when the process **C** of determining a node to conduct the confirmation process is conducted first than when both nodes conduct the confirmation process **B**.

Note that, in the present embodiment, a communication node for determining whether an annular path is formed or not, i.e., the node **ND4**, switches the port **P9** to SUSPEND state. However, a communication node for determining whether an annular path is formed or not may be different from a communication node for switching a port to SUSPEND state in order to make the added transmission path unavailable. In order to prevent formation of an annular path, a transmission path other than the added transmission path, e.g., the transmission path **P3-P6** or **P7-P8** may be made unavailable.

### (Second Embodiment)

In the second embodiment of the present invention, the process of topology correction will be described in connection with FIG. **2** and FIGs. **7** to **16.** It is herein assumed that a plurality of transmission paths are simultaneously added by turning on the power of a communication node.

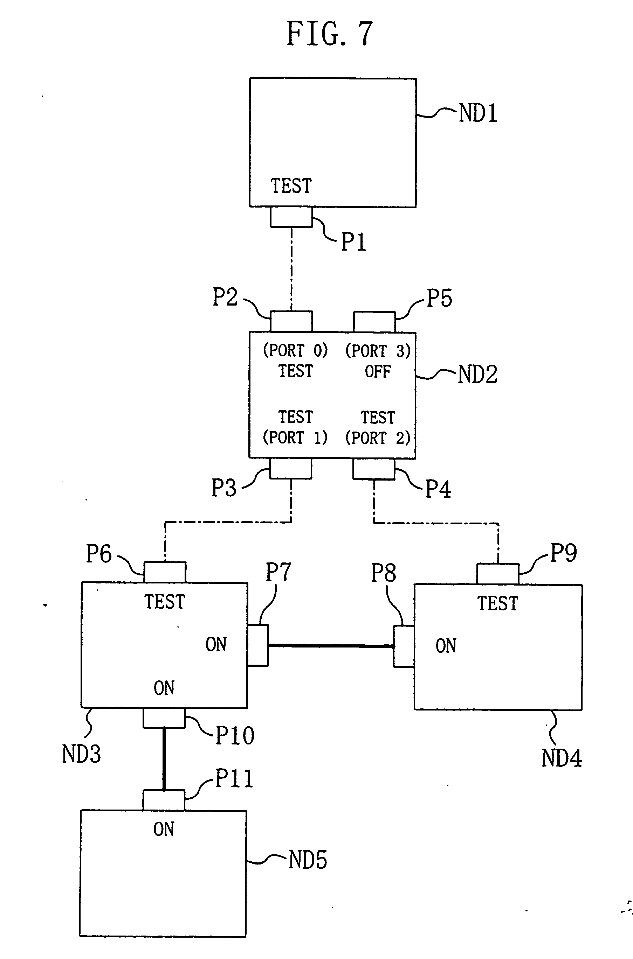

FIG. **7** conceptually shows a network including five communication nodes **ND1** to **ND5.** In FIG. **7,** ports **P1** and **P2,** ports **P3** and **P6,** ports **P4** and **P9,** ports **P7** and **P8,** and ports **P10** and **P11** are connected through a corresponding communication cable. Since the power of the communication node **ND2** is off, transmission paths **P1-P2, P3-P6** and **P4-P9** are in OFF state (shown by chain lines).

The processing in the case where the power of the communication node **ND2** is turned on will now be described according to the flow of FIG. **2**.

When the power of the communication node **ND2** is turned on, four communication nodes **ND1** to **ND4** sense change in topology resulting from an added transmission path (step **SA1**).

Then, of the four communication nodes **ND1** to **ND4,** a node to transmit a confirmation signal is determined (step **SA2**). In the present embodiment, when the power of the communication node is turned on, the powered-on equipment actively serves to transmit a confirmation signal so as to sequentially confirm the added transmission paths.

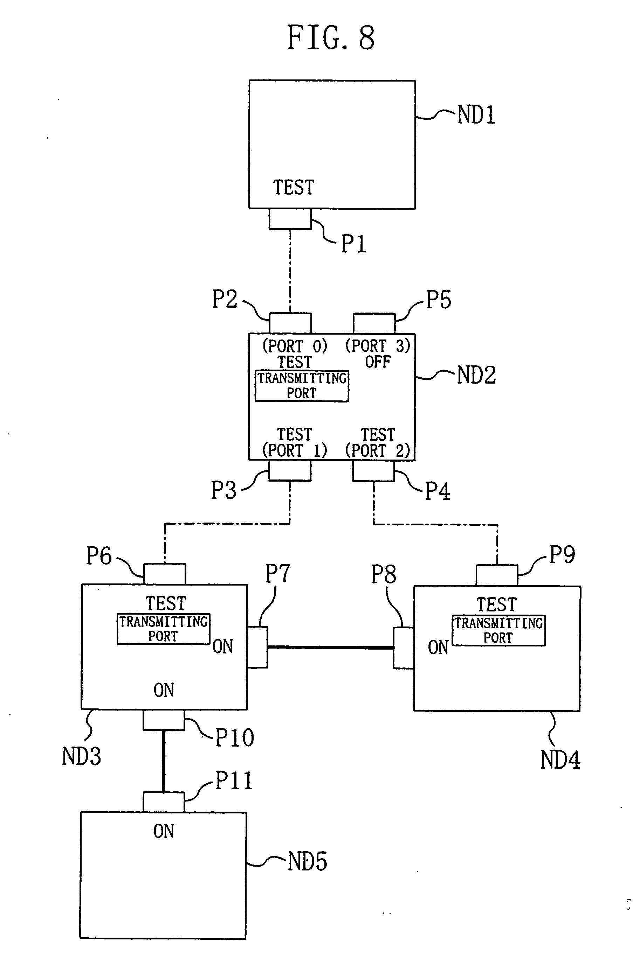

In contrast, when the method for determining the parent-child relation as described in the first embodiment is directly used, a plurality of communication ports may serve as ports to transmit a confirmation signal, as shown in FIG. **8**. More specifically, in the example of FIG. **8**, the node **ND2** transmits a confirmation signal regarding the transmission path **P1-P2,** the node **ND3** transmits a confirmation signal regarding the transmission path **P3-P6,** and the node **ND4** transmits a confirmation signal regarding the transmission path **P4-P9**.

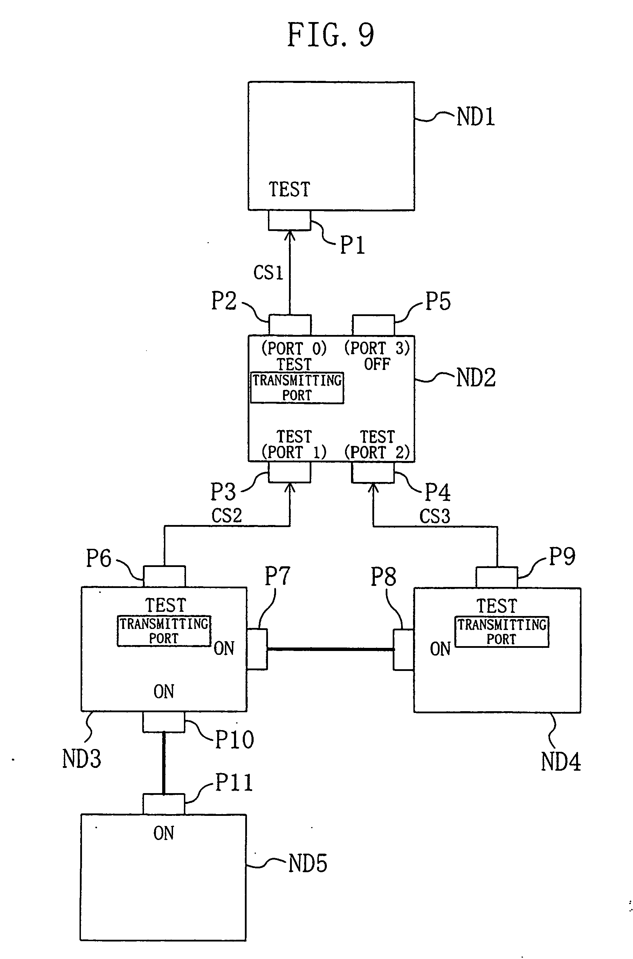

For example, provided that the communication nodes **ND2**, **ND3**, **ND4** simultaneously conduct the confirmation process without cooperating with each other, confirmation signals **CS1**, **CS2** and **CS3** respectively transmitted from the ports **P2**, **P6** and **P9** will not return to the original nodes, as shown in FIG. **9**. Accordingly, it is determined that no annular path is formed, and all the added transmission paths, that is, the transmission paths **P1-P2**, **P3-P6** and **P4-P9**, will be rendered in ON state.

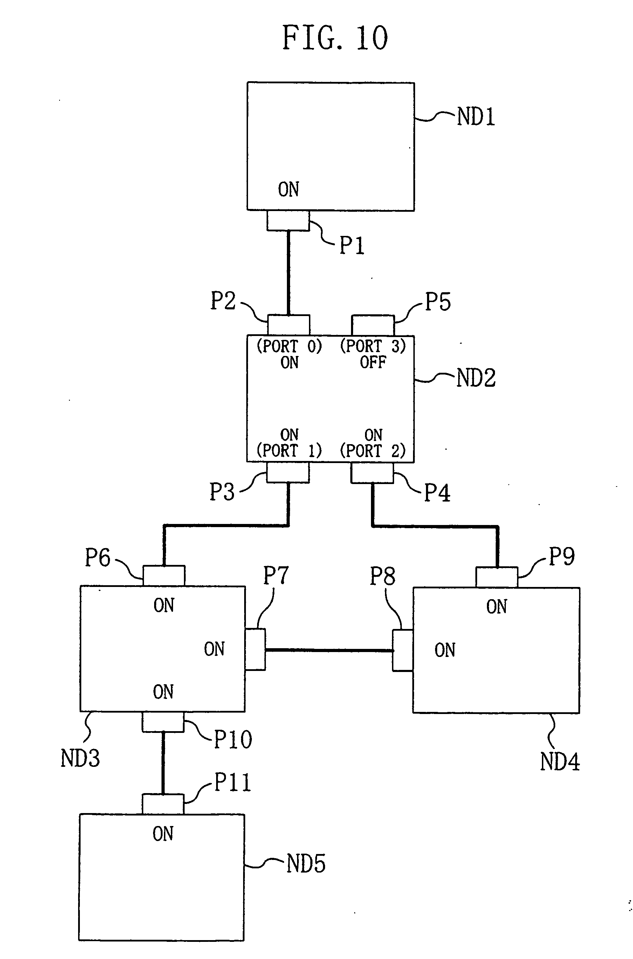

As a result, as shown in FIG. **10,** an annular path is formed, so that communication can no longer continue on the network.

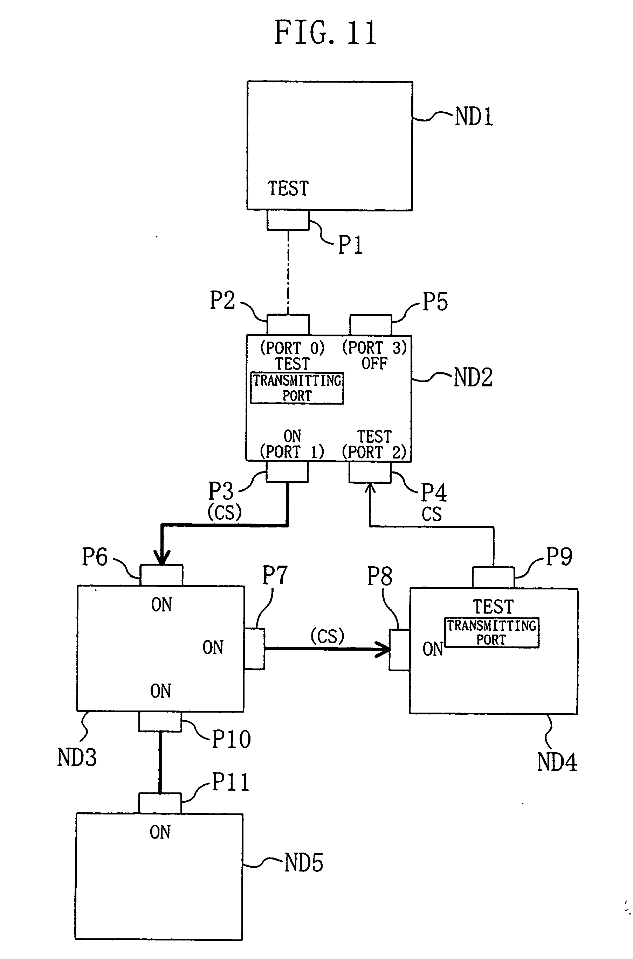

In order to eliminate such a problem resulting from a plurality of equipments serving to transmit a confirmation signal, it is required for the equipments to cooperate with each other so that they do not conduct the processing at the same timing. For example, in the case of FIG. **8,** after the communication node **ND3** conducts the confirmation process and renders the transmission path **P3-P6** in ON state, the communication node **ND4** may then conduct the confirmation process. In this case, formation of an annular path can be confirmed as shown in FIG. **11**, and therefore the transmission path **P4-P9** will not be rendered in ON state.

However, such processing requires cooperation of a plurality of communication nodes.

In the present embodiment, when the power of a communication node is turned on, the powered-on equipment actively serves to transmit a confirmation signal so as to sequentially confirm the added transmission paths. This eliminates the need to consider such complicated cooperation as described above, simplifying the processing.

Note that, a specific determination method in step **SA2** is as follows: like the processing in the case where the force_root bit defined in IEEE1394 is asserted, transmission of the PARENT_NOTIFY signal is intentionally delayed for the powered-on equipment so that every port in the powered-on equipment serves as a parent port.

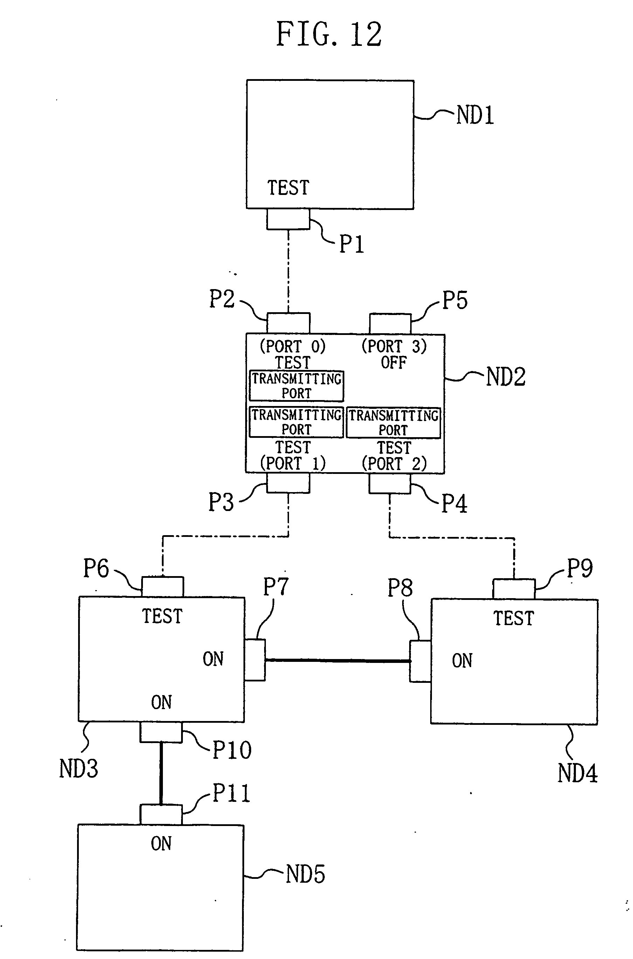

FIG. **12** shows the state in which only the communication node **ND2** serves as a node to transmit a confirmation signal as a result of the above processing. The communication node **ND2** then conducts the processing of step **SA4** and the following steps. The communication nodes other than the node **ND2** proceed to step **SA11,** and terminate the processing.

The processing in step **SA4** and the following steps is the same as that of the first embodiment. It should be noted that, in the case where there are a plurality of ports from which a confirmation signal is to be transmitted as in the present embodiment, a confirmation signal is sequentially transmitted from the ports in ascending order of the port number.

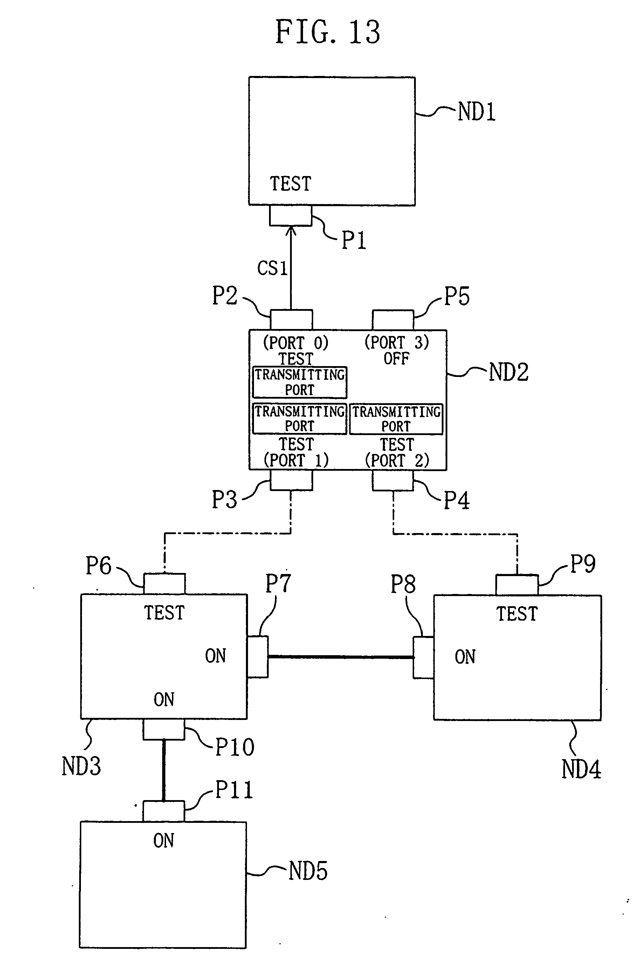

As shown in FIG. **13**, a confirmation signal **CS1** is first transmitted from the port **P2** having port number 0. Since the communication node **ND1** does not have any other port in ON state, the confirmation signal **CS1** is not propagated any more. Therefore, the condition of step **SA6** is satisfied after a sufficient period of time. Step **SA8** is then conducted. Since the condition of step **SA9** is not satisfied, the flow returns to step **SA4**.

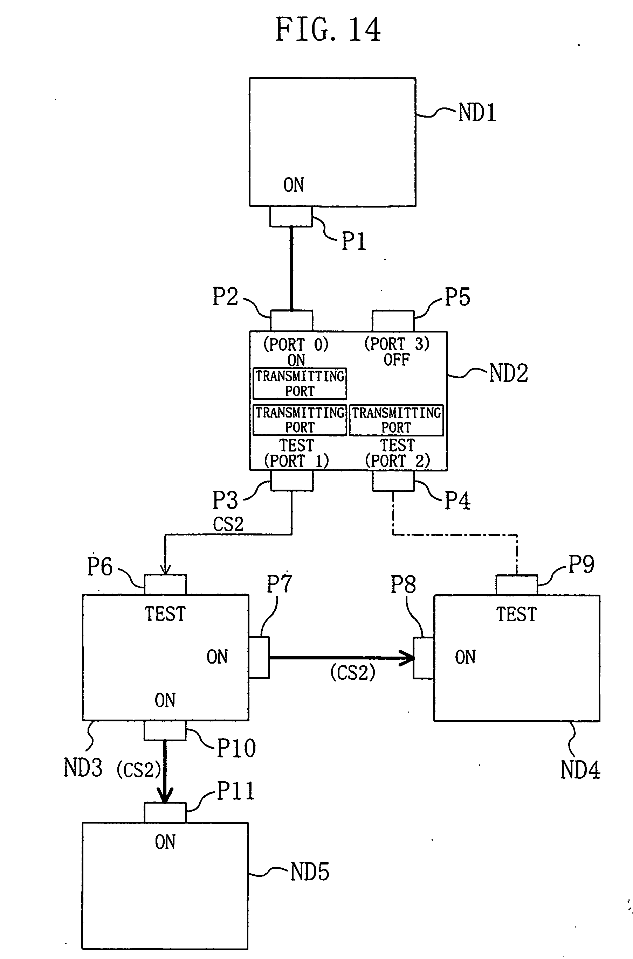

Subsequently, as shown in FIG. **14**, a confirmation signal **CS2** is transmitted from the port **P3** having port number 1. Steps **SA5** and **SA6** are repeated until the condition of step **SA5** or **SA6** is satisfied. In this case as well, since the condition of step **SA6** is satisfied after a sufficient period of time, step **SA8** is then conducted. However, the condition of step **SA9** is not satisfied, and therefore the flow returns to step **SA4**.

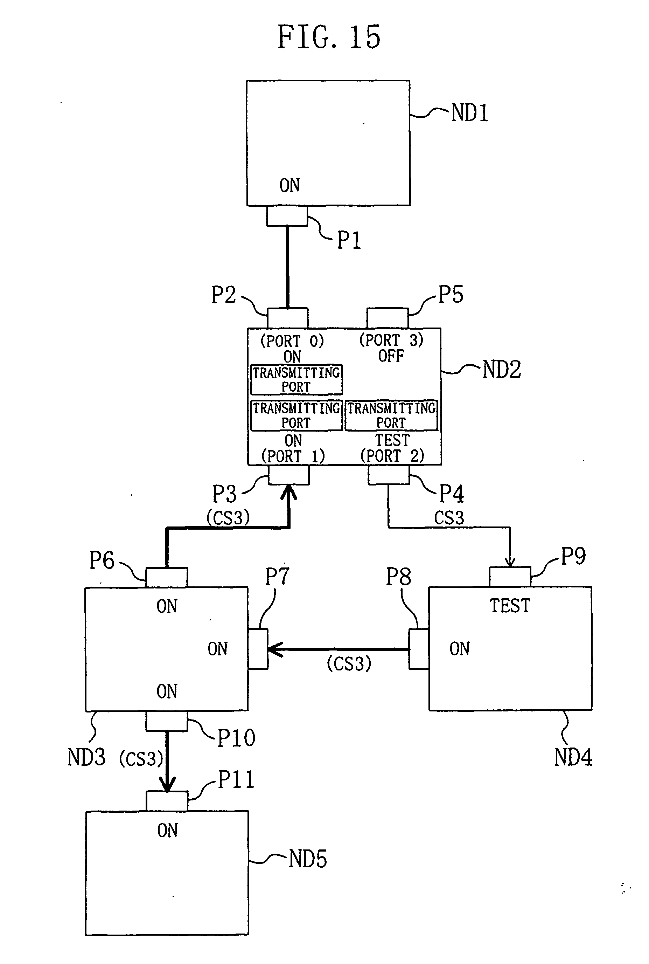

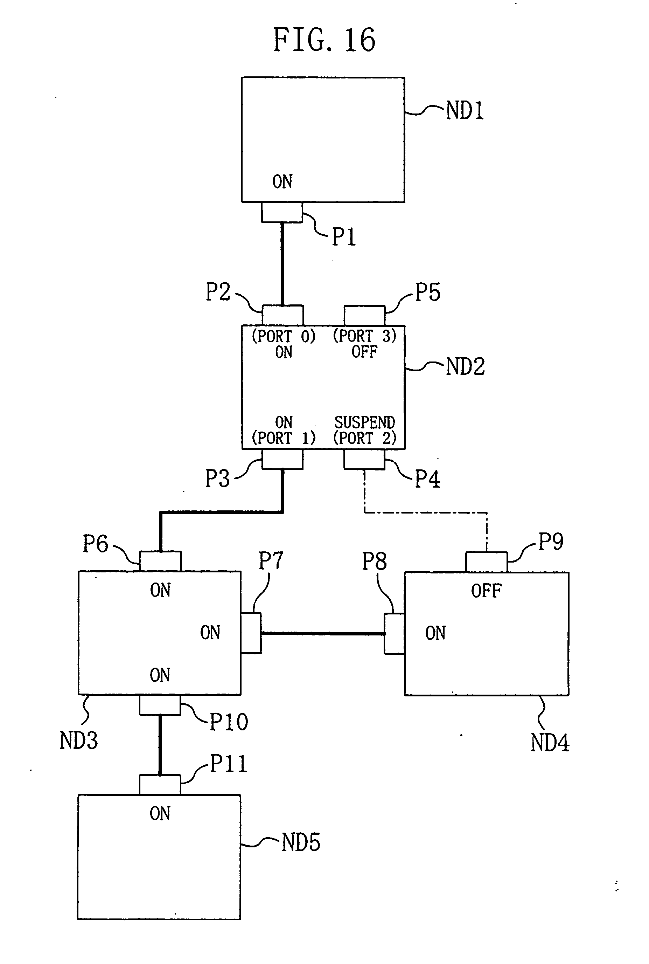

Then, as shown in FIG. **15**, a confirmation signal **CS3** is transmitted from the port **P4** having port number 2. The confirmation signal **CS3** passes through the communication nodes **ND4, ND3** and then returns to the communication node **ND2** from the port **P3** having port number 1. Therefore, as shown in FIG. **16**, the port **P4** is switched to SUSPEND state according to step **SA7**.

Since the condition of step **SA9** is now satisfied and then the condition of step **SA10** is satisfied, the flow proceeds to step **SA12,** where the bus reset is conducted. Subsequently, normal processing is conducted as defined in IEEE1394, whereby the network can be operated successfully.

Note that, in view of the case where the power of a plurality of equipments is simultaneously turned on, it is preferable to preset for each communication node different, unique waiting time calculated from, e.g., its ID. More specifically, a communication node to transmit a confirmation signal transmits a confirmation signal after its preset waiting time. As a result, even when the power of a plurality of equipments is simultaneously turned on, each equipment transmits a confirmation signal at different timing, enabling reliable confirmation of formation of an annular path.

### (Third Embodiment)

In the third embodiment of the present invention, the process of topology correction will be described in connection with FIG. **16** and FIGs. **17** to **21**. It is herein assumed that a transmission path is disconnected due to failure of a communication cable, power-off of a communication node, or the like.

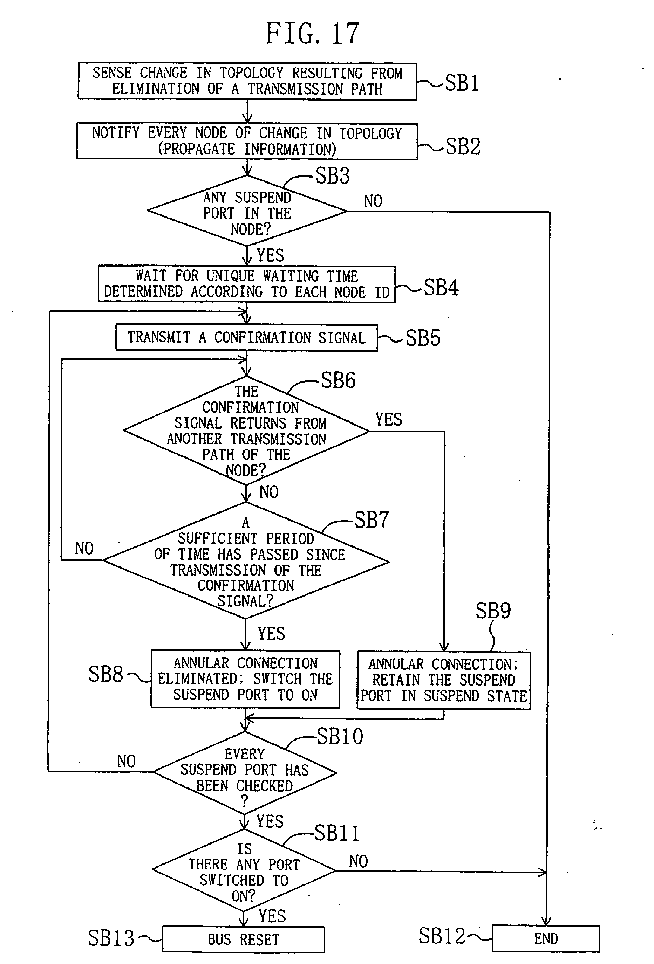

FIG. **17** is a flowchart illustrating the process flow upon sensing a disconnected transmission path. Steps **SB4** to **SB7** correspond to an annular-path determination process, and step **SB8** corresponds to a transmission-path restoration process.

Description will now be given for the topology configuration of FIG. **16.** It is herein assumed that a communication cable is removed from the port **P10** so as to disconnect the transmission path **P10-P11.**

In steps **SB1** and **SB2,** each communication node **ND1** to **ND5** is notified of change in topology. Each communication node **ND1** to **ND5** then determines whether or not it has any port in SUSPEND state (step **SB3**). In this case, it is only the communication node **ND2** that has a port in SUSPEND state. Therefore, the other communication nodes terminate the processing in step **SB12.**

The communication node **ND2** as a determining node waits for the waiting time determined according to its node ID (step **SB4**). The reason why each communication node satisfying the condition of step **SB3** waits for the unique waiting time determined based on the respective node ID so that each communication node conducts the processing at different timing is as follows: provided that there are a plurality of SUSPEND ports on the network, simultaneously conducting the subsequent processing for the SUSPEND ports may possibly restore an unwanted transmission path and thus an annular path, as in the example shown in the second embodiment. Therefore, conducting the subsequent processing by each communication node after the respective unique waiting time prevents the subsequent processing of each communication node from overlapping each other in terms of time, thereby preventing restoration of an unwanted transmission path.

Note that the waiting time of each communication node is herein determined according to the respective node ID. However, it should be appreciated that the same effects can be obtained by any method for determining the respective waiting time as long as the waiting time ensures that each communication node will not interfere with the subsequent processing of another communication node.

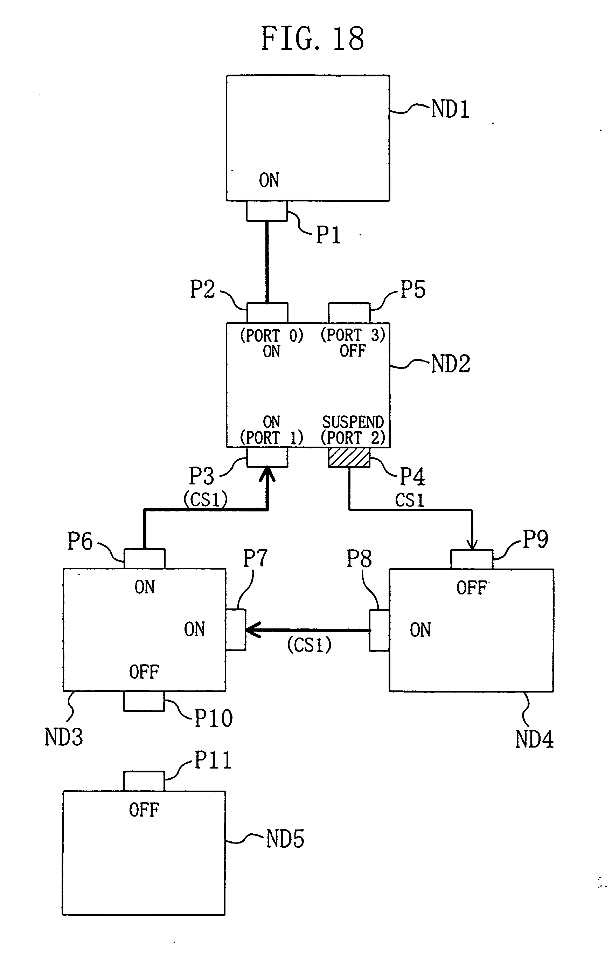

Thereafter, as shown in FIG. **18,** the communication node **ND2** transmits a confirmation signal **CS1** from the port **P4** in SUSPEND state. The confirmation signal **CS1** thus transmitted from the port **P4** is sequentially propagated through the communication nodes **ND4, ND3,** and then returns to the port **P3.** In other words, the condition of step **SB6** is satisfied, and it is determined in step **SB9** that annular connection still exists. Therefore, the port **P4** is retained in SUSPEND state.

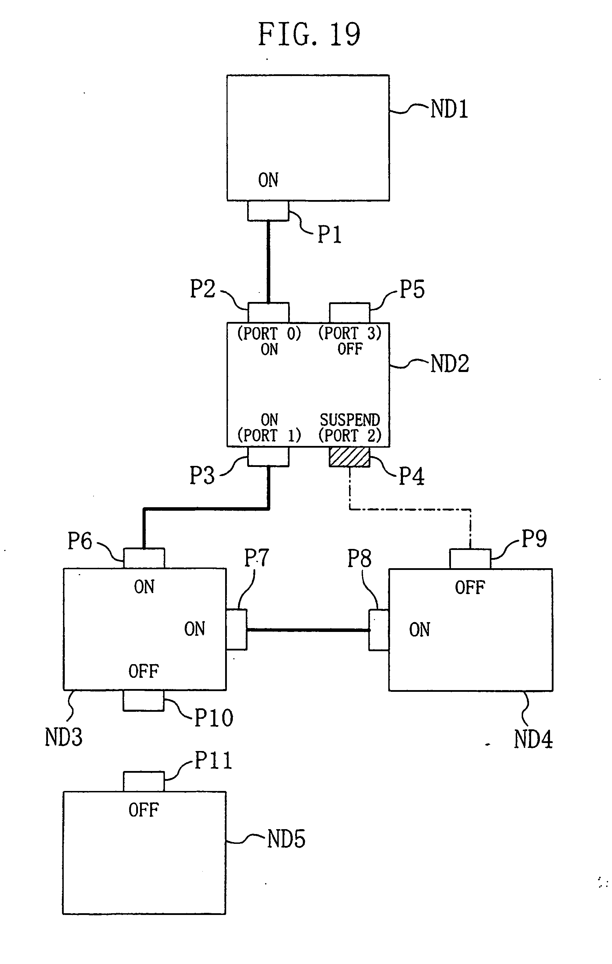

The condition of step **SB10** is satisfied, but the condition of step **SB11** is not satisfied. Therefore, the processing is terminated in step **SB12**. As a result, the network is rendered in the state of FIG. **19**.

Hereinafter, the processing in the case where the power of the communication path **ND3** is shut off in FIG. **19** so that the transmission paths **P3-P6** and **P7-P8** are disconnected will be described.

Like the above processing, in steps **SB1** to **SB4,** the communication nodes **ND1, ND3** to **ND5** having no SUSPEND port proceed to step **SB12,** and the communication node **ND2** as a determining node waits for the designated waiting time (step SB4).

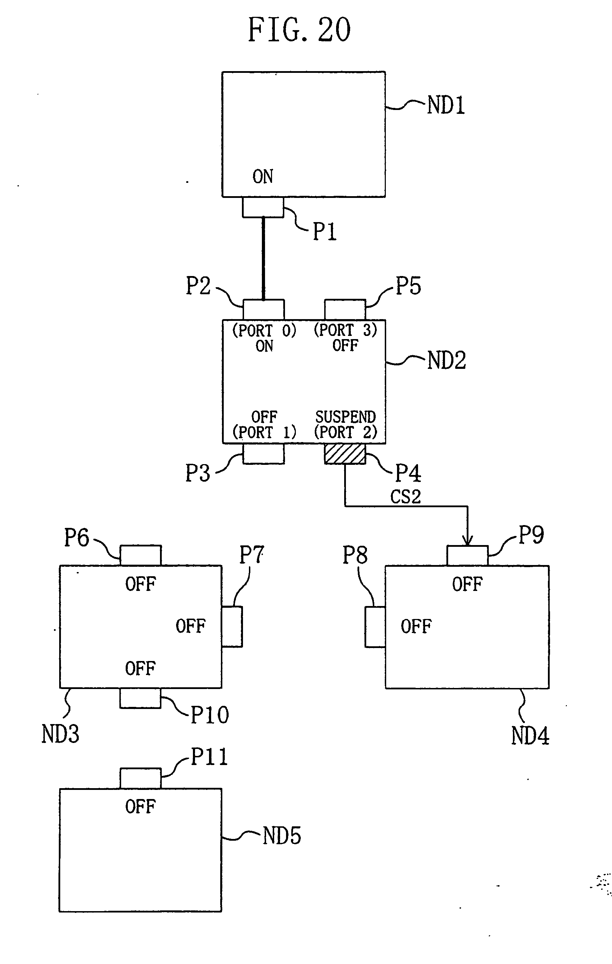

As shown in FIG. **20**, the communication node **ND2** then transmits a confirmation signal **CS2** from the port **P4** (step **SB5**). The confirmation signal **CS2** is propagated to the communication node **ND4** but will not be propagated any more. As a result, the condition of step **SB7** is satisfied. It is therefore determined that no annular path is formed, and the port **P4** in SUSPEND state is switched to ON state.

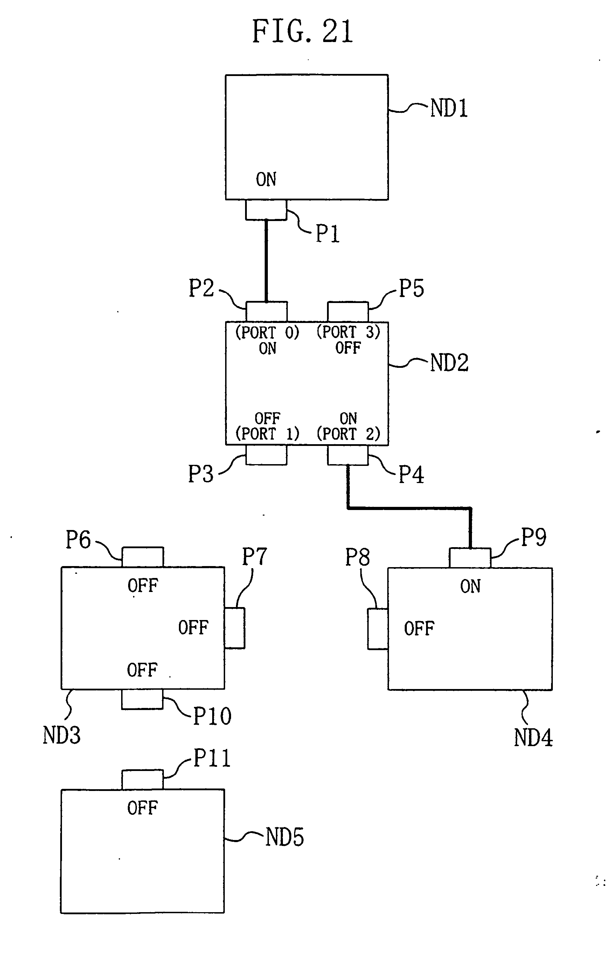

Since the conditions of steps **SB10** and **SB11** are both satisfied, bus reset is conducted in step **SB13.** As a result, as shown in FIG. **21**, the transmission path **P4-P9** is restored, and the port **P9** is rendered in ON state.

Note that the above embodiments have been described for the network as defined in IEEE1394. However, it should be appreciated that the present invention is readily applicable to another network.

As has been described above, according to the present invention, when a new transmission path is added, at least one of the communication nodes located at both ends of the added transmission path determines whether or not a new annular path is formed by the added transmission path. If it is determined that a new annular path is formed, that transmission path is logically or physically made unavailable in order to prevent formation of the annular path.

According to the present invention, when an arbitrary transmission path is eliminated, at least one of the communication nodes located at both ends of an unavailable transmission path determines whether or not an annular path is formed if the unavailable transmission path becomes available. If it is determined that no annular path is formed, the unavailable transmission path is made available.

As a result, even an interface that is incapable of communication when the communication nodes are connected in an annular manner can continue communication even after annular connection, and also continue communication by using the maximum available transmission paths.

## Claims

1. A method for correcting topology in a network including a plurality of communication nodes, comprising:
a transmission process (steps SA1, SA2, SA3, SA4) in which, when a new transmission path is added, at least one of communication nodes located at both ends of the added transmission path transmits (step SA4) a confirmation signal through the added transmission path,
a propagation process in which each node receiving said confirmation signal through a transmission path propagates the confirmation signal to other nodes through all transmission paths other than the receiving transmission path,
an annular-path determination process in which the node transmitting the confirmation signal determines as a determining node whether or not a new annular path is formed by determining (steps SA5, SA6) whether or not the confirmation signal returns from a transmission path of the determining node other than the added transmission path,
**characterized by**
a transmission-path disconnection process (steps SA7, SA8) in which, when it is determined in the annular-path determination process that a new annular path is formed, at least one of the communication nodes located at both ends of the added transmission path logically or physically makes the added transmission path unavailable in order to prevent formation of the annular path-, and
a bus reset process (step SA10, SA12) for performing the bus reset when it is determined in the annular-path determining process (steps SA1, SA2, SA3, SA4, SA5, SA6) that a new annular path is not formed.

2. The method for correcting topology according to claim 1, wherein when a new transmission path is added by turning on power of a single communication node, only the powered-on communication node serves as the determining node in the annular-path determination process (steps SA1, SA2, SA3, SA4, SA5, SA6).

3. The method for correcting topology according to claim 1 or 2, wherein the communication nodes have preset, unique waiting times different from each other, and in the annular-path determination process (steps SA1, SA2, SA3, SA4, SA5, SA6), the determining node transmits the confirmation signal after the corresponding preset waiting time.

4. The method for correcting topology according to one of claims 1 to 3, wherein the transmission-path disconnection process (steps SA7, SA8) includes the step of logically or physically making an attribute of a port which forms the added transmission path unavailable by one of the communication nodes located at both ends of the added transmission path.

5. A method for correcting topology in a network including a plurality of communication nodes, comprising:
a transmission process in which, when an arbitrary transmission path is eliminated, at least one of communication nodes is notified (step SB1, SB2) that the arbitrary transmission path is eliminated and located at both ends of a logically or physically unavailable transmission path, transmits (step SB5) a confirmation signal through the unavailable transmission path,
a propagation process in which each node receiving said confirmation signal through a transmission path propagates the confirmation signal to other nodes through all transmission paths other than the receiving transmission path,
an annular-path determination process in which the node transmitting the confirmation signal determines as a determining node whether or not a new annular path is formed by determining (steps SB6, SB7) whether or not the confirmation signal returns from a transmission path of the determining node other than the added transmission path;
**characterized by**
a transmission path restoration process (steps SB8, SB9) in which, when it is determined in the annular-path determination process that no annular path is formed, at least one of the communication nodes located at both ends of the unavailable transmission path makes the unavailable path available, and
a bus reset process (step SB13) in which, when the unavailable transmission path is made available, the bus reset is performed.

6. A communication node for forming a network, comprising:
ports for communicating with other nodes;
a transmission path disconnection section for, when a new transmission path is added, making the added transmission path unavailable,
a transmitting section for, when the new transmission path is added to one of the ports (P1, P2, ...) transmitting a confirmation signal through the added transmission path,
a determining section for determining whether or not a new annular path is formed in the network by determining whether or not the confirmation signal transmitted by the transmitting section returns from a transmission path connected to one of the ports other than the added transmission path,
a receiving section for, when another node transmits the confirmation signal, receiving the confirmation signal through one of the ports,
a propagating section for propagating the confirmation signal received by the receiving section to other nodes through all ports other than the receiving port, and a bus reset performing section for performing the bus reset of the network,
**characterized by** the transmission path disconnection section making the added transmission path unavailable if the determining section determines that a new annular path is formed,
and the bus reset performing section performing the bus reset when the determining section determines that a new annular path is not formed in the network.

7. A communication node for forming a network, comprising:
ports for communicating with other nodes,
a transmission path restoration section for, when an arbitrary transmission path connected to one of the ports is eliminated, making a logically or physically unavailable transmission path connected to the communication node available;
a transmitting section for transmitting a confirmation signal through the transmission path made available;
a determining section for determining whether or not a new annular path is formed in the network by determining whether or not the confirmation signal returns from a transmission path connected to one of the other ports other than the added transmission path;
a receiving section for, when another node transmits the confirmation signal receiving the confirmation signal through one of the ports;
a propagating section for propagating the confirmation signal received by the receiving section to other nodes through all ports other than the receiving port, and
a bus reset performing section for performing the bus reset of the network,
**characterized by**
the transmission path restoration section making the transmission path made available newly unavailable if the determining section determines that a new annular path is formed in the network, and if the determining section determines that a new annular path is not formed in the network the transmission path restoration section making the transmission path made available not newly unavailable, and the bus reset performing section performing the bus reset.

8. Use of the method according to any of claims 1 to 5 in a network as defined in IEEE 1394.

9. A network as defined in IEEE 1394 containing a node according to claim 6 or 7.

## Patentansprüche

1. Verfahren zum Korrigieren von Topologie in einem Netzwerk, das eine Vielzahl von Kommunikationsknoten enthält, wobei es umfasst:
einen Übertragungs-Prozess (Schritte SA1, SA2, SA3, SA4), in dem, wenn ein neuer Übertragungsweg hinzugefügt wird, wenigstens einer der Kommunikationsknoten, die sich an beiden Enden des hinzugefügten Übertragungsweges befinden, ein Bestätigungssignal über den hinzugefügten Übertragungsweg sendet (Schritt SA4),
einen Weiterleitungsprozess, in dem jeder Knoten, der das Bestätigungssignal über einen Übertragungsweg empfängt, das Bestätigungssignal über alle Übertragungswege außer dem Empfangs-Übertragungsweg zu anderen Knoten weiterleitet,
einen Ringweg-Bestimmungsprozess, in dem der Knoten, der das Bestätigungssignal sendet, als ein bestimmender Knoten bestimmt, ob ein neuer Ringweg ausgebildet wird, indem er bestimmt (Schritte SA5, SA6), ob das Bestätigungssignal über einen Übertragungsweg des bestimmenden Knotens außer dem hinzugefügten Übertragungsweg zurückkehrt,
**gekennzeichnet durch**
einen Übertragungsweg-Unterbrechungsprozess (Schritte SA7, SA8), in dem, wenn in dem Ringweg-Bestimmungsprozess bestimmt wird, dass ein neuer Ringweg ausgebildet ist, wenigstens einer der Kommunikationsknoten, die sich an beiden Enden des hinzugefügten Übertragungsweges befinden, den hinzugefügten Übertragungsweg logisch oder physisch unverfügbar macht, um die Ausbildung des Ringweges zu verhindern, und
einen Bus-Reset-Prozess (Schritt SA10, SA12) zum Durchführen des Bus-Resets, wenn in dem Ringweg-Bestimmungsprozess (Schritte SA1, SA2, SA3, SA4, SA5, SA6) bestimmt wird, dass kein neuer Ringweg ausgebildet ist.

2. Verfahren zum Korrigieren von Topologie nach Anspruch 1, wobei, wenn ein neuer Übertragungsweg hinzugefügt wird, indem ein einzelner Kommunikationsknoten angeschaltet wird, nur der angeschaltete Kommunikationsknoten als der bestimmende Knoten in dem Ringweg-Bestimmungsprozess (Schritte SA1, SA2, SA3, SA4, SA5, SA6) dient.

3. Verfahren zum Korrigieren von Topologie nach Anspruch 1 oder 2, wobei die Kommunikationsknoten voreingestellte, einzigartige Wartezeiten haben, die sich voneinander unterscheiden, und in dem Ringweg-Bestimmungsprozess (Schritte SA1, SA2, SA3, SA4, SA5, SA6) der bestimmende Knoten das Bestätigungssignal nach der entsprechenden voreingestellten Wartezeit überträgt.

4. Verfahren zum Korrigieren von Topologie nach einem der Ansprüche 1 bis 3, wobei die Übertragungsweg-Unterbrechungsprozess (Schritte SA7, SA8) den Schritt umfasst, in dem ein Attribut eines Ports, der den hinzugefügten Übertragungsweg ausbildet, durch einen der Kommunikationsknoten, die sich an beiden Enden des hinzugefügten Übertragungsweges befinden, logisch oder physisch unverfügbar gemacht wird.

5. Verfahren zum Korrigieren von Topologie in einem Netzwerk, das eine Vielzahl von Kommunikationsknoten enthält, wobei es umfasst:
einen Übertragungsprozess, in dem, wenn ein beliebiger Übertragungsweg beseitigt wird, wenigstens einer der Kommunikationsknoten, die sich an beiden Enden eines logisch oder physisch unverfügbaren Übertragungsweges befinden, benachrichtigt wird (Schritt SB1, SB2), dass der beliebige Übertragungsweg beseitigt wird, und er ein Bestätigungssignal über den unverfügbaren Übertragungsweg sendet (Schritt SB5),
einen Weiterleitungsprozess, in dem jeder Knoten, der das Bestätigungssignal über einen Übertragungsweg empfängt, das Bestätigungssignal über alle Übertragungswege außer dem Empfangs-Übertragungsweg zu anderen Knoten weiterleitet,
einen Ringweg-Bestimmungsprozess, in dem der Knoten, der das Bestätigungssignal überträgt, als ein bestimmender Knoten bestimmt, ob ein neuer Ringweg ausgebildet wird oder nicht, indem er bestimmt (Schritte SB6, SB7), ob das Bestätigungssignal über einen Übertragungsweg des bestimmenden Knotens außer dem hinzugefügten Übertragungsweg zurückkehrt oder nicht;
**gekennzeichnet durch**
einen Übertragungsweg-Wiederherstellungsprozess (Schritte SB8, SB9), in dem, wenn in dem Ringweg-Bestimmungsprozess bestimmt wird, dass kein Ringweg ausgebildet wird, wenigstens einer der Kommunikationsknoten, die sich an beiden Enden des unverfügbaren Übertragungsweges befinden, den unverfügbaren Weg verfügbar macht, und
einen Bus-Reset-Prozess (Schritt SB13), in dem, wenn der unverfügbare Übertragungsweg verfügbar gemacht wird, der Bus-Reset durchgeführt wird.

6. Kommunikationsknoten zum Ausbilden eines Netzwerks, der umfasst:
Ports zum Kommunizieren mit anderen Knoten;
einen Übertragungsweg-Unterbrechungsabschnitt, der, wenn ein neuer Übertragungsweg hinzugefügt wird, den hinzugefügten Übertragungsweg unverfügbar macht,
einen Übertragungsabschnitt, der, wenn der neue Übertragungsweg zu einem der Ports (P1, P2, ...) hinzugefügt wird, ein Bestätigungssignal über den hinzugefügten Übertragungsweg überträgt,
einen Bestimmungsabschnitt, der bestimmt, ob ein neuer Ringweg in dem Netzwerk ausgebildet wird oder nicht, indem er bestimmt, ob das durch den Übertragungsabschnitt übertragene Bestätigungssignal über einen mit einem der Ports verbundenen Übertragungsweg außer dem hinzugefügten Übertragungsweg zurückkehrt oder nicht,
einen Empfangsabschnitt, der, wenn ein anderer Knoten das Bestätigungssignal überträgt, das Bestätigungssignal über einen der Ports empfängt,
einen Weiterleitungsabschnitt, der das durch den Empfangsabschnitt empfangene Bestätigungssignal über alle Ports außer dem Empfangsport zu anderen Knoten weiterleitet, und
einen Bus-Reset-Durchführabschnitt zum Durchführen des Bus-Resets des Netzwerks,
**dadurch gekennzeichnet, dass**:
der Übertragungsweg-Unterbrechungsabschnitt den hinzugefügten Übertragungsweg unverfügbar macht, wenn der Bestimmungsabschnitt bestimmt, dass ein neuer Ringweg ausgebildet ist, und
der Bus-Reset-Durchführabschnitt den Bus-Reset durchführt, wenn der Bestimmungsabschnitt bestimmt, dass kein neuer Ringweg in dem Netzwerk ausgebildet wird.

7. Kommunikationsknoten zum Ausbilden eines Netzwerks, der umfasst:
Ports zum Kommunizieren mit anderen Knoten,
einen Übertragungsweg-Wiederherstellungsabschnitt, der, wenn ein beliebiger Übertragungsweg, der mit einem der Ports verbunden ist, beseitigt wird, einen logisch oder physisch unverfügbaren Übertragungsweg, der mit dem Kommunikationsknoten verbunden ist, verfügbar macht;
einen Übertragungsabschnitt zum Übertragen eines Bestätigungssignals über den verfügbar gemachten Übertragungsweg;
einen Bestimmungsabschnitt, der bestimmt, ob ein neuer Ringweg in dem Netzwerk ausgebildet ist oder nicht, indem er bestimmt, ob das Bestätigungssignal über einen mit einem der anderen Ports verbundenen Übertragungsweg außer dem hinzugefügten Übertragungsweg zurückkehrt oder nicht;
einen Empfangsabschnitt, der, wenn ein anderer Knoten das Bestätigungssignal überträgt, das Bestätigungssignal über einen der Ports empfängt;
einen Weiterleitungsabschnitt, der das durch den Empfangsabschnitt empfangene Bestätigungssignal zu anderen Knoten über alle Ports außer dem Empfangsport weiterleitet, und
einen Bus-Reset-Durchführabschnitt zum Durchführen des Bus-Resets des Netzwerks,
**dadurch gekennzeichnet, dass**:
der Übertragungsweg-Wiederherstellungsabschnitt den verfügbar gemachten Übertragungsweg erneut unverfügbar macht, wenn der Bestimmungsabschnitt bestimmt, dass ein neuer Ringweg in dem Netzwerk ausgebildet ist, und
wenn der Bestimmungsabschnitt bestimmt, dass kein neuer Ringweg in dem Netzwerk ausgebildet ist, der Übertragungsweg-Wiederherstellungsabschnitt den verfügbar gemachten Übertragungsweg nicht erneut unverfügbar macht, und der Bus-Reset-Durchführabschnitt den Bus-Reset durchführt.

8. Einsatz des Verfahrens nach einem der Ansprüche 1 bis 5 in einem Netzwerk, das in IEEE 1394 definiert ist.

9. Netzwerk, das in IEEE 1394 definiert ist und einen Knoten nach Anspruch 6 oder 7 enthält.

## Revendications

1. Procédé de correction de la topologie dans un réseau comportant une pluralité de noeuds de communication, comprenant :
un processus d'émission (étapes SA1, SA2, SA3, SA4) dans lequel, lorsqu'un nouveau trajet de communication est ajouté, l'un au moins des noeuds de communication situés aux deux extrémités du trajet d'émission ajouté émet (étape SA4) un signal de confirmation par le trajet d'émission ajouté,
un processus de propagation dans lequel chaque noeud recevant ledit signal de confirmation par un trajet d'émission propage le signal de confirmation vers les autres noeuds par tous les trajets d'émission autres que le trajet d'émission de réception,
un processus de détermination de trajet annulaire dans lequel le noeud émettant le signal de confirmation détermine en tant que noeud de détermination si, oui ou non, un nouveau trajet annulaire s'est formé en déterminant (étapes SA5, SA6) si, oui ou non, le signal de confirmation revient d'un trajet d'émission du noeud de détermination autre que le trajet d'émission ajouté,
**caractérisé par**
un processus de déconnexion de trajet d'émission (étapes SA7, SA8) dans lequel, lorsqu'il est déterminé dans le processus de détermination de trajet annulaire qu'un nouveau trajet annulaire s'est formé, l'un au moins des noeuds de communication situés aux deux extrémités du trajet d'émission ajouté rend indisponible, logiquement ou physiquement, le trajet d'émission ajouté afin d'empêcher la formation du trajet annulaire, et
un processus de réinitialisation de bus (étape SA10, SA12) pour exécuter la réinitialisation de bus lorsqu'il est déterminé dans le processus de détermination de trajet annulaire (étapes SA1, SA2, SA3, SA4, SA5, SA6) qu'un nouveau trajet annulaire ne s'est pas formé.

2. Procédé de correction de la topologie selon la revendication 1, dans lequel lorsqu'un nouveau trajet d'émission est ajouté en mettant sous tension un seul noeud de communication, seul le noeud de communication mis sous tension fonctionne comme étant le noeud de détermination dans le processus de détermination de trajet annulaire (étapes SA1, SA2, SA3, SA4, SA5, SA6).

3. Procédé de correction de la topologie selon la revendication 1 ou 2, dans lequel les noeuds de communication ont des temps d'attente uniques préréglés différents les uns des autres, et dans le processus de détermination de trajet annulaire (étapes SA1, SA2, SA3, SA4, SA5, SA6), le noeud de détermination émet le signal de confirmation au bout du temps d'attente préréglé correspondant.

4. Procédé de correction de la topologie selon l'une des revendications 1 à 3, dans lequel le processus de déconnexion de trajet d'émission (étapes SA7, SA8) comprend l'étape consistant à rendre, logiquement ou physiquement, un attribut d'un port qui forme le trajet d'émission ajouté indisponible par l'un des noeuds de communication situés aux deux extrémités du trajet d'émission ajouté.

5. Procédé de correction de la topologie dans un réseau comportant une pluralité de noeuds de communication, comprenant :
un processus d'émission dans lequel, lorsqu'un trajet d'émission arbitraire est éliminé, l'un au moins des noeuds de communication reçoit la notification (étape SB1, SB2) que le trajet d'émission arbitraire est éliminé et placé aux deux extrémités d'un trajet d'émission logiquement ou physiquement indisponible, émet (étape SB5) un signal de confirmation par le trajet d'émission indisponible,
un processus de propagation dans lequel chaque noeud recevant ledit signal de confirmation par un trajet d'émission propage le signal de confirmation vers les autres noeuds par tous les trajets d'émission autres que le trajet d'émission de réception,
un processus de détermination de trajet annulaire dans lequel le noeud émettant le signal de confirmation détermine en tant que noeud de détermination si, oui ou non, un nouveau trajet annulaire s'est formé en déterminant (étapes SB5, SB6) si, oui ou non, le signal de confirmation revient d'un trajet d'émission du noeud de détermination autre que le trajet d'émission ajouté ;
**caractérisé par**
un processus de restauration de trajet d'émission (étapes SB8, SB9) dans lequel, lorsqu'il est déterminé dans le processus de détermination de trajet annulaire qu'aucun trajet annulaire ne s'est formé, l'un au moins des noeuds de communication situés aux deux extrémités du trajet d'émission indisponible rend disponible le trajet indisponible, et
un processus de réinitialisation de bus (étape SB13) dans lequel, lorsque le trajet d'émission indisponible est rendu disponible, la réinitialisation de bus est exécutée.

6. Noeud de communication pour former un réseau, comprenant :
des ports pour communiquer avec d'autres noeuds ;
une section de déconnexion de trajet d'émission pour, lorsqu'un nouveau trajet d'émission est ajouté, rendre indisponible le trajet d'émission ajouté,
une section d'émission pour, lorsque le nouveau trajet d'émission est ajouté à l'un des ports (P1, P2, ...), émettre un signal de confirmation par le trajet d'émission ajouté,
une section de détermination pour déterminer si, oui ou non, un nouveau trajet annulaire s'est formé dans le réseau en déterminant si, oui ou non, le signal de confirmation émis par la section d'émission revient d'un trajet d'émission relié à l'un des ports autre que le trajet d'émission ajouté,
une section de réception pour, lorsqu'un autre noeud émet le signal de confirmation, recevoir le signal de confirmation par l'un des ports,
une section de propagation pour propager le signal de confirmation reçu par la section de réception vers d'autres noeuds par tous les ports autres que le port de réception, et
une section d'exécution de réinitialisation de bus pour exécuter la réinitialisation de bus du réseau
**caractérisé en ce que**
la section de déconnexion de trajet d'émission rend indisponible le trajet d'émission ajouté si la section de détermination détermine qu'un nouveau trajet annulaire s'est formé et **en ce que** la section d'exécution de réinitialisation de bus exécute la réinitialisation de bus lorsque la section de détermination détermine qu'un nouveau trajet annulaire ne s'est pas formé dans le réseau.

7. Noeud de communication pour former un réseau, comprenant :
des ports pour communiquer avec d'autres noeuds,
une section de restauration de trajet d'émission pour, lorsqu'un trajet d'émission arbitraire relié à l'un des ports est éliminé, rendre disponible un trajet d'émission logiquement ou physiquement indisponible relié au noeud de communication ;
une section d'émission pour émettre un signal de confirmation par le trajet d'émission rendu disponible ;
une section de détermination pour déterminer si, oui ou non, un nouveau trajet annulaire s'est formé dans le réseau en déterminant si, oui ou non, le signal de confirmation revient d'un trajet d'émission relié à l'un des ports autre que le trajet d'émission ajouté ;
une section de réception pour, lorsqu'un autre noeud émet le signal de confirmation, recevoir le signal de confirmation par l'un des ports ;
une section de propagation pour propager le signal de confirmation reçu par la section de réception vers d'autres noeuds par tous les ports autres que le port de réception, et
une section d'exécution de réinitialisation de bus pour exécuter la réinitialisation de bus du réseau,
**caractérisé en ce que**
la section de restauration de trajet d'émission rend nouvellement indisponible le trajet d'émission rendu disponible si la section de détermination détermine qu'un nouveau trajet annulaire s'est formé dans le réseau, et si la section de détermination détermine qu'un nouveau trajet annulaire ne s'est pas formé dans le réseau, la section de restauration de trajet d'émission rend non nouvellement indisponible le trajet d'émission rendu disponible, et **en ce que** la section d'exécution de réinitialisation de bus exécute la réinitialisation de bus.

8. Utilisation du procédé selon l'une quelconque des revendications 1 à 5 dans un réseau tel que défini dans l'IEEE 1394.

9. Réseau tel que défini dans l'IEEE 1394 combinant un noeud selon la revendication 6 ou 7.
